# DEMANDE DE BREVET EUROPEEN

(11) **EP 4 775 026 A1**
(43) Date de publication de la demande: **15.07.2026**
(21) Numéro de dépôt: 26151682.7
(22) Date de dépôt: 13.01.2026
(51) Int. Cl.: A01G 9/24, H01J 61/72

(54) **MODULE DE PROTECTION, RENFORCEMENT ET STIMULATION DU VÉGÉTAL**

(30) Priorité: 13.01.2025 FR 2500339
(71) Demandeur: Naotec, 17800 Pons (FR)
(72) Inventeur: SANDOVAL, Laure, 87100 Limoges (FR)
(74) Mandataire: Aquinov

(57) **Abrégé**

L'invention concerne un module de protection, renforcement et stimulation du végétal (1) comprenant un boîtier (2) muni d'une ouverture et dans lequel est agencé au moins une source lumineuse apte à émettre un rayonnement dans le spectre UV en direction de l'ouverture.

Selon l'invention, ladite au moins une source lumineuse comprend une lampe UV moyenne pression (3).

## Description

La présente invention concerne le domaine technique des modules de renforcement végétal.

Il existe une inquiétude grandissante au sujet des attaques d'insectes et de contamination par des champignons sur les cultures qui entrainent chaque année des pertes importantes notamment dans le domaine de la viticulture où le mildiou se développe chaque année.

Il est connu d'utiliser des produits phytosanitaires pour protéger les cultures de végétaux. Or ce recours systématique à des produits chimiques a des effets néfastes sur l'environnement et la santé. Dans le cadre d'une agriculture plus durable, une réduction voire une éradication de leurs usages est recherchée.

Des études ont montré l'efficacité de l'utilisation du rayonnement ultraviolet sur les végétaux pour les protéger des maladies.

Le rayonnement ultraviolet est un rayonnement invisible qui émet dans la gamme de longueur d'onde de 100 à 400 nanomètres. Le rayonnement ultraviolet se divise en trois bandes, à savoir UV-A, UV-B et UV-C. Les UV-A ont une longueur d'onde de 315 à 400 nm. Les UV-B ont une longueur d'onde de 280 à 315 nm. Les UV-C ont une longueur d'onde de 100 à 280 nm.

Il existe des méthodes d'application utilisant une technologie à base de lumière pulsée. Le spectre de la lumière pulsée balaye des longueurs d'ondes qui s'étendent des ultraviolets jusqu'aux infrarouges en passant par le visible. Des flashes de lumière à haute intensité et de courte durée sont appliqués de manière contrôlée sur les végétaux pour provoquer des effets spécifiques, à savoir stimuler la photosynthèse, renforcer les mécanismes de défense contre les pathogènes, lutter contre les stress abiotiques comme la sécheresse ou les variations de température.

Cette technologie utilisant la lumière pulsée UV présente toutefois des inconvénients.

Les paramètres de la lumière pulsée (durée, intensité, fréquence) sont dépendants du type de culture végétal, de son état mais également de son environnement et sont ainsi très difficiles à optimiser afin d'éviter des effets délétères de phytotoxicité. Seule une partie du spectre émis autour des UVs présente un intérêt pour protéger les cultures.

L'utilisation d'une technologie basée sur de la lumière pulsée ne permet pas de protéger efficacement contre toutes les attaques telles que le mildiou. Elle doit donc être tout de même associée à l'utilisation de produits phytosanitaires dans le domaine de la viticulture. De plus, pour observer des résultats significatifs, le temps de passage d'un traitement mis en œuvre à partir de cette technologie est relativement long, de l'ordre de 3km/h le long d'une culture végétal. L'installation industrielle de l'équipement de cette technologie par lumière pulsée et son coût associé compliquent son usage. Cette technologie fonctionne en haute tension, ce qui impose des consignes de sécurité relativement contraignantes à appliquer pour les utilisateurs et les agents de maintenance.

Il est également connu des méthodes utilisant une technologie basée sur l'utilisation des UV basse pression.

Les UV basse pression émettent dans le spectre UV-C. Ils sont notamment caractérisés par une raie d'émission à 254 nm. Les rayons UV-C ont le plus d'énergie. Ils sont très dangereux même à très forte dose pour toutes les formes de vie. Ils ne traversent pas la couche d'ozone et n'atteignent jamais la terre. Ils sont créés de façon artificielle pour tuer des agents pathogènes. Ils sont ainsi généralement utilisés pour la désinfection de l'eau ou d'une surface.

L'utilisation d'une technologie reposant sur le seul spectre UV-C montre des résultats limités en termes de stimulation des mécanismes de défenses des végétaux.

L'invention vise à pallier ces inconvénients en proposant un module de protection, renforcement et stimulation du végétal facile à mettre en œuvre et peu coûteux.

L'invention porte à ces fins sur un module de protection, renforcement et stimulation du végétal comprenant un boîtier muni d'une ouverture et dans lequel est agencé au moins une source lumineuse apte à émettre un rayonnement dans le spectre UV en direction de l'ouverture.

Selon l'invention, ladite au moins une source lumineuse comprend une lampe UV moyenne pression.

Cibler des raies d'émission dans le spectre spectrale des UV permet d'obtenir un spectre lumineux comportant plusieurs raies d'émission dans la bande spectrale des UV avec de fortes intensités. Cela induit un meilleur rendement pour la source lumineuse. Un spectre large comprenant tous les types d'UV est efficace non seulement pour enclencher les mécanismes naturels de défense des végétaux pour lutter contre des attaques de maladies mais permet aussi de désactiver les micro-organismes en ciblant leur ADN/ARN, et de dégrader des composés chimiques présents en surface (comme les pesticides ou les résidus pharmaceutiques) par un processus d'oxydation avancée.

Les raies supplémentaires, caractéristiques d'un traitement aux UV moyenne pression, permettent la dégradation, voire la minéralisation, de molécules chimiques. Il en résulte deux intérêts : La destruction de micro-organismes, La dégradation de molécules pesticides et médicamenteuses.

Un module selon l'invention comprenant une lampe UV moyenne pression présente ainsi les meilleurs effets pour stimuler l'ensemble des mécanismes de défense des végétaux favoriser la photosynthèse et améliorer les rendements permettant ainsi de réduire l'usage de produits phytosanitaires. Ce spectre spécifique est composé de 6 raies spécifiques de forte intensité balayant ainsi l'ensemble des UV (UV-A, UV-B et UV-C) permettant ainsi d'optimiser de manière maximale les interactions spectrales avec le végétal pour stimuler ses mécanismes de défense. De plus, une réponse systémique des végétaux est induite qui se traduit par une amélioration générale des capacités défensives d'un végétal partiellement exposé.

L'avantage de l'utilisation d'une telle technologie de lampe, contrairement à des lampes UV basse pression beaucoup plus couramment utilisées, est la grande puissance dégagée par les lampes moyenne pression. En effet, il existe différentes puissances possibles ainsi qu'une modulation en puissance grâce à son alimentation, dans cette configuration une lampe de 3000W de puissance électrique est installée dans chacun des boîtiers. A titre de comparaison, une lampe UV basse pression de la même taille consomme environ une centaine de watts, soit 30 fois moins qu'une lampe UV moyenne pression. De plus, cette différence de consommation électrique se retrouve dans la puissance lumineuse considérablement augmentée, elle aussi.

Selon une forme de réalisation de l'invention, ladite lampe UV moyenne pression est une lampe à vapeur de mercure moyenne pression.

Dans les lampes à vapeur de mercure à moyenne pression, plusieurs raies de 200 à 600nm sont présentes. De telles lampes peuvent être conçues pour émettre principalement des UV-A (de 380 à 315nm), des UV-B (de 315 et 280 nm) ou des UV-C (de 280 à 200nm) et une partie du visible.

De plus, l'utilisation de la technologie moyenne pression consomme tout autant d'énergie que la lumière pulsée ou les UVs basse pression pour atteindre des intensités lumineuses équivalentes. Cependant une lampe moyenne pression par rapport à ses concurrentes présente une intensité lumineuse bien plus importante permettant ainsi de minimiser leur nombre dans cette application.

Les lampes UV moyenne pression selon l'invention sont fabriquées avec du mercure pour un rayonnement UV à ondes courtes avec notamment un pic à 253,7 nm. Le spectre de la lampe peut être modifié par l'ajout d'additifs et l'ajustement de la quantité de mercure, afin de générer exactement les raies spectrales nécessaires pour leur conférer une compatibilité maximale avec les photorécepteurs des plantes permettant d'activer leurs mécanismes naturels de défense.

De plus, ces lampes peuvent être dopées au fer optimisées pour la bande UV-A (315 à 400 nm), au gallium optimisée pour émettre dans la gamme 230 à 450 nm et le rayonnement UV-A, au l'indium optimisée pour la bande UV-B, au xénon optimisée pour obtenir un spectre de rayonnement quasi-continu, allant de 200 à 1000 nm environ avec notamment la présence d'IR.

Selon une caractéristique de l'invention, le module de protection, renforcement et stimulation du végétal comprend également un système de ventilation apte à générer un flux d'air autour de ladite lampe UV moyenne pression.

Les lampes UV à moyenne pression ont une température de fonctionnement autour de 300°C. La mise en œuvre d'un système de ventilation au sein du boîtier permet de réguler la température pour optimiser le fonctionnement de la lampe UV moyenne pression.

Selon une forme de réalisation de l'invention, le boîtier comporte au moins une entrée de ventilation et au moins une sortie de ventilation et au moins un ventilateur est apte à générer un flux d'air vers la au moins une sortie de ventilation, ladite lampe UV moyenne pression étant disposée entre ledit au moins un ventilateur et ladite au moins une sortie de ventilation.

Le ventilateur est avantageusement agencé entre la au moins une première entrée de ventilation et la au moins une première sortie de ventilation afin de créer un effet de ventilation autour de la lampe UV moyenne pression.

Pour une lampe à vapeur de mercure moyenne pression, la température critique à ne pas dépasser est de 350°C, ce qui pourrait dessouder les connexions de la lampe. Un système de ventilation est installé de part et d'autre de la lampe afin d'éviter une surchauffe de celle-ci, dans le cas contraire cela pourrait entraîner une casse au niveau des électrodes. Le flux d'air ainsi créé permet de retirer un maximum de calories sur la lampe et donc de la faire descendre en température.

Cette température doit être maîtrisée. La lampe doit tout de même avoir une certaine chaleur pour pouvoir délivrer toute sa puissance lumineuse. Un système de ventilation commandé permet de contrôler la température.

Selon une caractéristique de l'invention, le module de protection, renforcement et stimulation du végétal comprend des ailettes agencées dans le boîtier pour favoriser la ventilation dans le boîtier autour de lampe UV moyenne pression.

La mise en œuvre d'ailettes dans le boîtier permet d'assurer une distribution uniforme de l'air dans le boîtier. En fonction de leur agencement, les ailettes permettent de diriger l'air dans une direction spécifique.

Selon une caractéristique de l'invention, le module de protection, renforcement et stimulation du végétal comprend en outre au moins un réflecteur, ledit au moins un réflecteur étant agencé dans le boîtier pour rediriger au moins une partie du rayonnement de ladite lampe UV moyenne pression vers l'ouverture.

L'utilisation d'un réflecteur permet d'optimiser les effets de la lampe UV moyenne pression en limitant les pertes de rayonnements non dirigés vers l'ouverture.

Un tel réflecteur permet de récupérer toute l'énergie développée par la lampe UV moyenne pression sur la zone à traiter. En effet, la forme de la lampe UV moyenne pression s'apparente à un tube de section circulaire. Cette section circulaire émet des photons tout autour de son axe, ceci entraine de fait une perte de 50% de l'énergie lumineuse générée par la lampe UV moyenne pression sur la zone à traiter. La mise en œuvre de réflecteur et leur dimensionnement permet de rediriger les photons perdus sur la zone à cibler et donc de multiplier par deux la puissance délivrée sur l'espace à traiter tout en prenant en compte le rendement de réflexion UV du réflecteur.

Selon une forme de réalisation de l'invention, ladite lampe UV moyenne pression s'étend dans le boîtier selon une direction verticale et ledit au moins un réflecteur comprend une forme courbe concave s'étendant selon la direction verticale, ladite lampe UV moyenne pression étant agencée entre ledit au moins un réflecteur et l'ouverture.

La forme allongée du réflecteur selon l'invention suivant la direction verticale de la lampe UV moyenne pression maximise la surface de réflexion des rayonnements de la lame UV à moyenne pression non dirigés vers l'ouverture.

Un tel réflecteur muni d'une forme courbe concave disposé dans le boîtier est conçu afin d'entourer au moins partiellement la lampe UV moyenne pression. Les réflecteurs couramment utilisé ont une forme plus aplati et le choix d'une forme plus resserrée autour de la lampe UV moyenne pression est privilégiée afin de concentrer un maximum d'énergie dans un espace restreint.

Selon une caractéristique de l'invention, le réflecteur a une forme semi-cylindrique ellipsoïdale, obtenue en coupant un cylindre ellipsoïdal verticalement en deux parties égales et la lampe UV moyenne pression est disposée dans une zone centrale du réflecteur.

Un tel réflecteur ayant une forme semi-cylindrique ellipsoïdale permet d'obtenir un rayonnement de forme elliptique. Avantageusement une telle forme de réflecteur favorise la concentration du rayonnement réfléchi et permet de stresser le végétal de façon brutale et sur un temps court.

Selon une forme de réalisation de l'invention, ladite lampe UV moyenne pression est montée dans le boîtier au moyen d'au moins un élément de maintien semi-rigide.

Fixer la lampe UV moyenne pression à un élément de maintien semi-rigide permet de garder une tolérance de mouvement pour le maintien de la lampe UV moyenne pression. Ainsi, les déformations induites par la chaleur générée sont compensées par cet élément de maintien semi-rigide. Dans le cas d'une lampe UV moyenne pression tubulaire, un élément de maintien semi-rigide est fixé à chacune des extrémités de la lampe UV moyenne pression.

La montée en température de la lampe UV moyenne pression peut induire des problèmes pour sa fixation. Car en effet, avec la chaleur, les matériaux se dilatent, ce qui peut engendrer une casse de la lampe en cas de dilatation trop importante sur un système trop rigide. La mise en œuvre d'éléments de maintien semi-rigides permet le maintien en position de la lampe tout en s'adaptant à d'éventuelles déformations. De tels éléments de maintien semi-rigides permettent également de limiter les vibrations dans la lampe UV moyenne pression.

Selon une autre caractéristique de l'invention, des ailettes s'étendent depuis ledit au moins réflecteur selon une direction non parallèle à la direction verticale.

Concevoir un réflecteur muni d'ailettes permet de réduire l'encombrement dans le boîtier selon l'invention.

Associées à un système de ventilation, la mise en œuvre de telles ailettes réduit considérablement les turbulences au sein du boîtier ventilé.

Selon encore une autre caractéristique de l'invention, l'ouverture est munie d'une vitre de protection apte à laisser passer le rayonnement UV. Une telle vitre de protection permet de protéger la lampe UV moyenne pression de l'environnement mais également favorise la régulation du flux d'air au sein du boîtier.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue en perspective d'un exemple de réalisation d'un module de protection, renforcement et stimulation du végétal selon l'invention présentant un plan de coupe AA,
[Fig.2] est une vue en perspective de l'exemple de réalisation d'un module de protection, renforcement et stimulation du végétal de la figure 1 selon un angle différent et présentant un plan de coupe BB,
[Fig.3] est une vue en demi-coupe selon le plan de coupe AA de la figure 1,
[Fig.4] est un détail de la figure 3,
[Fig.5] est une vue en perspective d'un exemple de réalisation d'un élément de maintien selon l'invention,
[Fig.6] est une vue en demi-coupe selon le plan de coupe BB de la figure 2, et
[Fig.7] est une vue en perspective d'un exemple de réalisation d'un réflecteur selon l'invention et de son effet de réflexion.

Il est à noter que sur ces figures les éléments structurels et/ou fonctionnels communs aux différentes variantes peuvent présenter les mêmes références.

L'invention vise à proposer un module de protection, renforcement et stimulation du végétal pour renforcer notamment les mécanismes de défense face aux pathogènes, pour stimuler la photosynthèse, pour lutter contre les stress abiotiques comme la sécheresse ou encore les variations de température.

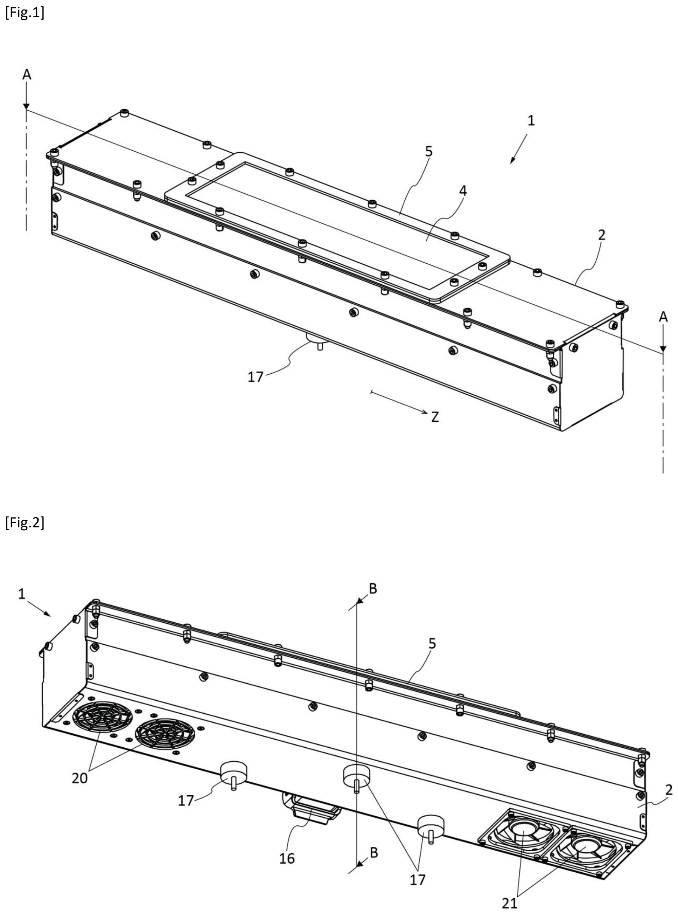

A ces fins, le module de protection, renforcement et stimulation du végétal désigné par la référence 1 tel qu'illustré aux figures 1 et 2 comprend un boîtier 2 de forme sensiblement parallélépipédique définissant un espace intérieur et muni d'une ouverture sur l'une de ses faces. Au moins une source lumineuse est agencée à l'intérieur du boîtier 2. D'autres formes de boîtier 2 sont compatibles dans le cadre de l'invention.

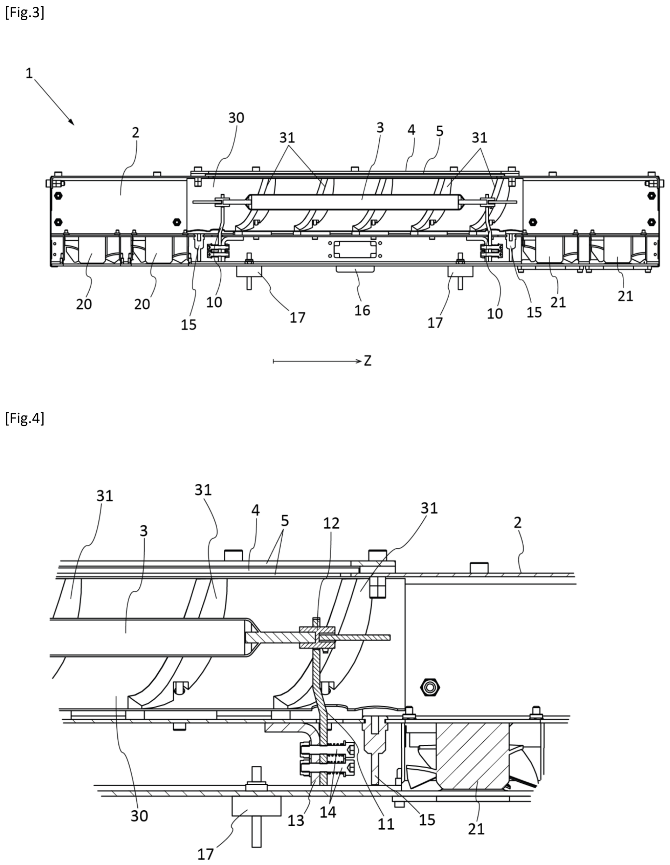

Selon la forme de réalisation illustrée, notamment visible à la figure 3, la source lumineuse comprend une lampe UV moyenne pression 3. La lampe UV moyenne pression 3 comprend une forme tubulaire qui s'étend selon la direction verticale Z.

Le boîtier 2 comprend des parois opaques qui ne laissent pas passer les rayonnements optiques. Le boîtier 2 est également muni d'une ouverture permettant au moins le passage des rayonnements UV.

Selon une forme de réalisation, le boîtier 2 est réalisé en aluminium afin d'éviter les oxydations dues aux intempéries.

L'ouverture s'étend selon la direction verticale Z et est obturée par une vitre de protection 4 apte au passage du rayonnement UV. Selon la forme de réalisation illustrée, la vitre de protection 4 est montée dans un cadre 5 fixé au boîtier 2 par un système boulonné.

La vitre de protection 4 est réalisée en quartz et non en verre car le verre joue un rôle de filtre sur les longueurs d'ondes présentes dans le domaine des UV et, par conséquent, ne les laisse plus passer.

Selon la forme de réalisation de l'invention, l'ouverture est de forme rectangulaire. D'autres formes d'ouverture sont compatibles dans le cadre de l'invention.

La forme allongée de l'ouverture rectangulaire selon l'exemple de réalisation illustré permet de mettre en vis-à-vis les rayonnements émis par la lampe UV moyenne pression 3 avec un végétal pour le renforcer efficacement sur sa hauteur.

Selon la forme de réalisation illustré, la fixation de la lampe UV moyenne pression 3 dans le boîtier 2 se fait sur une partie en céramique et non sur le corps en quartz de la lampe UV moyenne pression. La lampe UV moyenne pression 3 est fixée dans le boîtier 2 à ses deux extrémités aux moyens de deux éléments de maintien semi-rigides 10.

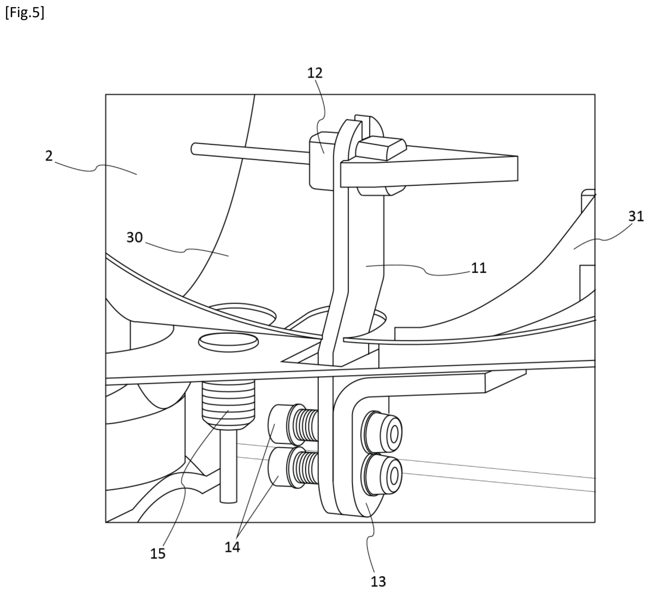

Un tel élément de maintien semi-rigide 10 est notamment visible aux figures 4 et 5. L'élément de maintien semi-rigide 10 comprend une languette déformable 11, d'une part en prise avec une bride d'extrémité 12 fixée à une extrémité de la lampe UV moyenne pression 3 et, d'autre part, fixée à une équerre 13 à l'intérieur du boîtier 2 aux moyens de deux systèmes boulonnés ressort 14.

La connexion se fait quant à elle par des connecteurs type fiche banane haute tension 15. Un connecteur, de type connecteur industriel modulaire 16 permet le branchement du module de protection, renforcement et stimulation du végétal 1 à un système d'alimentation électrique, de signaux de contrôle, de données. Les câbles d'alimentation de la lampe UV moyenne pression 3 (non visibles) sont blindés à l'intérieur du boîtier 2 afin d'éviter des perturbations électromagnétiques dues à la haute tension.

Selon la forme de réalisation illustrée, le module de protection, renforcement et stimulation du végétal 1 comprend trois silent bloc 17 composés d'un matériau élastique destinées à absorber les vibrations et les chocs lorsqu'ils sont en prise à une platine de fixation (non illustrée) pour fixer le module de protection, renforcement et stimulation du végétal 1 à un dispositif de renforcement végétal (non illustré) le comprenant.

Selon la forme de réalisation illustrée, le boîtier 2 comprend deux entrées d'air et deux sorties d'air de part et d'autre de la lampe UV moyenne pression 3.

Les deux entrées d'air sont situées sur un premier côté du boîtier 2 et sont munies chacune d'un ventilateur d'entrée 20 apte à générer un flux d'air vers l'intérieur du boîtier 2.

Les deux sortie d'air sont situées sur un deuxième côté du boîtier 2, à l'opposé du premier côté du boîtier 2. La lampe UV moyenne pression 3 est située entre le premier côté du boîtier 2 et le deuxième côté du boîtier 2. Selon la forme de réalisation illustrée, les deux sorties d'air sont munies chacune d'un ventilateur de sortie 21 apte à générer un flux d'air vers l'extérieur du boîtier 2.

Le module de renforment végétal 1 comprend également un réflecteur 30 apte à réfléchir le rayonnement de la lumière UV à moyenne pression 3 vers l'ouverture.

Le réflecteur 30 illustrée comprend une forme courbe concave s'étendant selon la direction verticale Z.

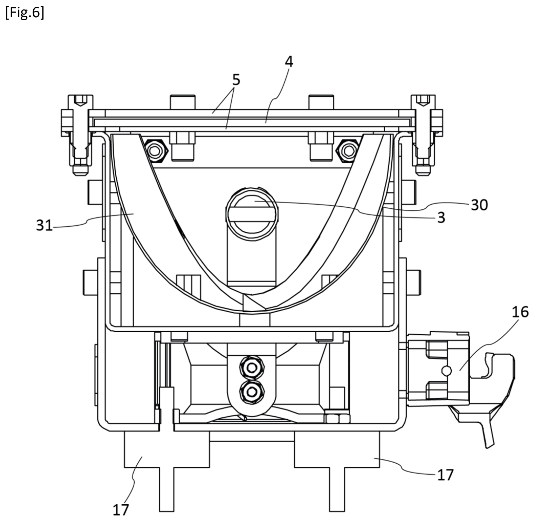

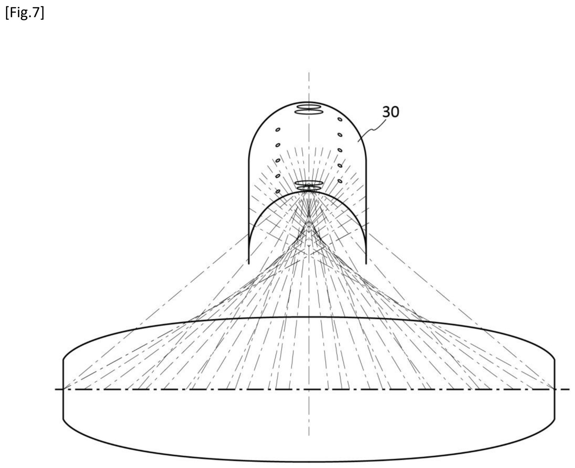

Selon la forme de réalisation illustrée notamment aux figures 6 et 7, le réflecteur 30 a une forme semi-cylindrique ellipsoïdale, obtenue en coupant un cylindre ellipsoïdal verticalement en deux parties égales.

Selon cette forme de réalisation, la lampe UV moyenne pression 3 est disposée dans une zone centrale du réflecteur 30. La zone centrale étant définie comme une zone comprenant un des foyers définies pour concevoir la forme elliptique du cylindre ellipsoïdal. Cette configuration permet d'optimiser la réflexion du rayonnement de la lampe UV moyenne pression 3. La figure 7 illustre notamment une partie des rayons réfléchis par un tel réflecteur 30 associé à la lampe UV moyenne pression 3 tubulaire telle qu'illustrée.

Pour favoriser le brassage de l'air à l'intérieur du boîtier 2, des ailettes 31 s'étendent depuis le réflecteur 30 selon une direction non orthogonale à la direction verticale Z. Selon la forme de réalisation illustrée, les ailettes 31 sont disposées à intervalle régulier autour de la lampe UV moyenne pression 3.

Pour utiliser le module de protection, renforcement et stimulation du végétal 1 tel que décrit, celui-ci est connecté via son connecteur industriel modulaire 16 à une source d'alimentation électrique et de contrôle permettant le fonctionnement contrôlé et commandé du système de ventilation ainsi que de la lampe UV moyenne pression 3.

Le module de protection, renforcement et stimulation du végétal 1 et notamment l'ouverture du boîtier 2 est placé en vis-à-vis d'un végétal. Le fonctionnement de la lampe UV moyenne pression 3 permet d'agir efficacement sur le végétal afin de le renforcer.

Selon une forme d'utilisation non décrite ici, le module de protection, renforcement et stimulation du végétal 1 est monté sur un dispositif de renforcement végétal permettant de déplacer le module de protection, renforcement et stimulation du végétal 1 le long d'un rang de végétaux.

Pour remplacer la lampe UV moyenne pression 3, une pression de chaque côté est exercée vers l'arrière des deux systèmes boulonnés ressort 14.

Bien entendu, diverses autres modifications peuvent être apportées à l'invention dans le cadre des revendications annexées.

## Revendications

1. Module de protection, renforcement et stimulation du végétal (1) comprenant un boîtier (2) muni d'une ouverture et dans lequel est agencé au moins une source lumineuse apte à émettre un rayonnement dans le spectre UV en direction de l'ouverture, **caractérisé en ce que** ladite au moins une source lumineuse comprend une lampe UV moyenne pression (3).

2. Module de protection, renforcement et stimulation du végétal (1) selon la revendication précédente dans lequel ladite lampe UV moyenne pression (3) est une lampe à vapeur de mercure moyenne pression.

3. Module de protection, renforcement et stimulation du végétal (1) selon l'une des revendications précédentes comprenant un système de ventilation apte à générer un flux d'air autour de ladite lampe UV moyenne pression (3).

4. Module de protection, renforcement et stimulation du végétal (1) selon l'une des revendications précédentes dans lequel le boîtier (2) comporte au moins une entrée de ventilation et au moins une sortie de ventilation et au moins un ventilateur d'entrée (20) est apte à générer un flux d'air vers la au moins une sortie de ventilation, ladite lampe UV moyenne pression (3) étant disposée entre ledit au moins un ventilateur d'entrée (20) et ladite au moins une sortie de ventilation.

5. Module de protection, renforcement et stimulation du végétal (1) selon l'une des revendications précédentes comprenant des ailettes (31) agencées dans le boîtier (2) pour favoriser la ventilation dans le boîtier (2) autour de lampe UV moyenne pression (3).

6. Module de protection, renforcement et stimulation du végétal (1) selon l'une des revendications précédentes comprenant en outre au moins un réflecteur (30), ledit au moins un réflecteur (30) étant agencé dans le boîtier (2) pour rediriger au moins une partie du rayonnement de ladite lampe UV moyenne pression (3) vers l'ouverture.

7. Module de protection, renforcement et stimulation du végétal (1) selon la revendication précédente dans lequel ladite lampe UV moyenne pression (3) s'étend dans le boîtier (2) selon une direction verticale (Z) et ledit au moins un réflecteur (30) comprend une forme courbe concave s'étendant selon la direction verticale (Z), ladite lampe UV moyenne pression (3) étant agencée entre ledit au moins un réflecteur (30) et l'ouverture.

8. Module de protection, renforcement et stimulation du végétal (1) selon la revendication précédente dans lequel le réflecteur (30) a une forme semi-cylindrique ellipsoïdale, obtenue en coupant un cylindre ellipsoïdal verticalement en deux parties égales et la lampe UV moyenne pression (3) est disposée dans une zone centrale du réflecteur (30).

9. Module de protection, renforcement et stimulation du végétal (1) selon l'une des revendications précédentes dans lequel ladite lampe UV moyenne pression (3) est montée dans le boîtier (2) au moyen d'au moins un élément de maintien semi-rigide (10).

10. Module de protection, renforcement et stimulation du végétal (1) selon l'une des revendications 7 à 9 dans lequel des ailettes (31) s'étendent depuis ledit au moins réflecteur (30) selon une direction non parallèle à la direction verticale (Z).

11. Module de protection, renforcement et stimulation du végétal (1) selon l'une des revendications précédentes dans lequel l'ouverture est munie d'une vitre de protection 4) apte à laisser passer le rayonnement UV.
